# EUROPEAN PATENT APPLICATION

(11) **EP 2 025 732 A1**
(43) Date of publication of application: **18.02.2009**
(21) Application number: 07290950.0
(22) Date of filing: 27.07.2007
(51) Int. Cl.: C09K 8/467, C09K 8/516, C04B 14/10, C04B 24/00

(54) **Self-repairing isolation systems**

(71) Applicant: Services Pétroliers Schlumberger, 75007 Paris (FR); Schlumberger Technology B.V., 2514 JG The Hague (NL); Schlumberger Holdings Limited, Road Town, Tortola (VG); PRAD Research and Development N.V., Willemstad, Curacao (AN)
(72) Inventor: Le Roy-Delage Sylvaine, 75015 Paris (FR); Bulte, Hélène, 78220 Viroflay (FR); Bellabarba, Mario, 92140 Clamart (FR)
(74) Representative: Raybaud, Hélène F. A.

(57) **Abstract**

The present invention discloses a composition for completing a well comprising a pumpable fluid made of a settable material and a reactive material able to swell in contact with liquid and/or gaseous hydrocarbon and/or water and/or carbon dioxide, said reactive material added in a quantity such that after the composition sets, a flow path of liquid and/or gaseous hydrocarbon and/or water and/or carbon dioxide created within the set composition will be stopped by swelling of the reactive material.

## Description

### Field of the Invention

The present invention relates to self-repairing isolation systems for use in oil, gas, water or geothermal wells, or the like. In particular, the invention relates to the placement of settable materials in the annular space around the outside of the casing or liner that are "self-repairing." These systems can adapt to seal off hydrocarbon flow paths that can develop in the in the following manner: a) flow paths that develop within the material itself after it has set; b) flow paths that develop during or after the setting phase at the interface between the liner or casing and the material; c) flow paths that develop during or after the setting phase at the interface between the material and the formation; and, d) any combination of a), b) and c). These systems are designed to seal these flow paths that can develop due to through variations in wellbore conditions over the life of the well.

### Description of the Prior Art

During the construction of underground wells, it is common, during and after drilling, to place a liner or casing, which is then secured by a settable material that is pumped into the annulus around the outside of the casing. In the industry, this practice is often referred to as "well cementing," although the material that is used for this purpose is not limited to cement. The settable material serves to support the casing; i.e. to "cement" it in place; and to isolate the various fluid-producing zones through which the well passes. This later function is important since it prevents fluids from different layers communicating with each other. For example, the settable material prevents formation fluids from entering the water table and polluting drinking water, or prevents fluids from one formation from flowing into another. In order to fulfill this function, the settable material must be a continuous sheath that does not allow any leak paths through or around it. After placement, this sheath can deteriorate over time and flow paths can be created through the material or at the interface between the material and the formation or the interface between the casing and the material. The deterioration can be due to physical stresses caused by pressure or temperature effects, chemical degradation of the cement, or various other reasons. These stresses may be caused due to changes originating in the well or surrounding formation, or due to changes in conditions at surface that have an impact on downhole environment.

There have been a number of proposals to deal with the deterioration of the isolation sheath over time. One approach is to design the settable material to take into account physical stresses that might be encountered during its lifetime. Such an approach is described in US 6,296,057. Another approach is to incorporate materials that improve the physical properties after the setting phase. US 6,458,198 describes the addition of amorphous metal fibers to the cement slurry to improve its strength and resistance to impact damage. EP 1129047 and WO 00/37387 describe the addition of flexible materials (rubber or polymers) to confer a degree of flexibility on the sheath. WO 01/70646 and WO 03/068708 describe systems that are less sensitive to the effects of temperature during the setting phase.

A number of proposals have been made for designs of self-healing concretes for use in the construction industry. These are described in US 5,575,841, US 5,660,624, US 5,989,334, US 6,261,360 and US 6,527,849, and in "Three designs for the internal release of sealants, adhesives, and waterproofing chemicals into concrete to reduce permeability", Dry, C. M., Cement and Concrete Research 30 (2000) 1969-1977. None of these are immediately applicable to oilfield operations because of the need for the material to remain pumpable during placement and because of the pressure and temperature range.

It is an objective of the present invention to provide wellbore isolation systems that can be placed by pumping in the normal manner, and which contain materials that allow the material to adapt its structure in response to environmental conditions.

### Summary of the Invention

In a first aspect, the invention concerns a settable material that can be used for zonal isolation between different sections of an oil well as part of normal oilfield operations. A composition is disclosed for completing a well comprising a pumpable fluid made of a settable material and a reactive material able to swell in contact with liquid and/or gaseous hydrocarbon and/or water and/or carbon dioxide, said reactive material added in a quantity such that after the composition sets, a flow path of liquid and/or gaseous hydrocarbon and/or water and/or carbon dioxide created within the set composition will be stopped by swelling of the reactive material.

Preferably, the composition has a solid volume fraction higher than 45% and preferably higher or equal to 50%. In another embodiment, the settable material contains cement, the pumpable fluid is a slurry and the composition has a solid volume fraction between 23% and 40% for an extended slurry with lower density.

The reactive material able to swell in contact with liquid and/or gaseous hydrocarbon can be made of granular, spherical, fiber-like, ovoid, mesh systems, or ribbons material selected from the group consisting of rubber, poly 2 2 1 bicyclo heptene (polynorbornene), alkylstyrene, crosslinked substituted vinyl acrylate copolymers, diatomaceous earth, natural rubber, polyisoprene rubber, vinyl acetate rubber, polychloroprene rubber, acrylonitrile butadiene rubber, hydrogenated acrylonitrile butadiene rubber, ethylene propylene diene monomer, ethylene propylene monomer rubber, polynorbornen, styrene butadiene rubber, styrene/propylene/diene monomer, brominated poly(isobutylene-co-4-methylstyrene) (BIMS), butyl rubber, chlorosulphonated polyethylenes, polyacrylate rubber, polyurethane, silicone rubber, brominated butyl rubber, chlorinated butyl rubber, chlorinated polyethylene, epichlorohydrin ethylene oxide copolymer, ethylene acrylate rubber, ethylene propylene diene terpolymer rubber, sulphonated polyethylene, fluoro silicone rubbers, fluoroelastomer, substituted styrene acrylate copolymer and combination thereof.

The reactive material able to swell in contact with water can be made of granular, spherical, fiber-like, ovoid, mesh systems, or ribbons material selected from the group consisting of acrylic acid type polymers, carboxymethyl cellulose type polymers, highly swelling clay minerals, isobutylene maleic anhydride, polyethylene oxide polymers, polyvinyl alcohol cyclic acid anhydride graft copolymer, sodium bentonite (montmorillonite), starch polyacrylate acid graft copolymer, starch polyacrylonitrile graft copolymers, vinyl acetate-acrylate copolymers, Super Absorbent Polymer, hydrogels and combination thereof. Preferably, the super-absorbent polymer is selected from the list consisting of polymethacrylate and polyacrylamide or a non-soluble acrylic polymers.

In another embodiment, the reactive material is made of materials able to swell in contact with liquid and/or gaseous hydrocarbon and of materials able to swell in contact with water and/or of materials able to swell in contact with carbon dioxide.

The settable material can be taken in the list constituted of: cement, microcement, geopolymer, mixture of cement and geopolymer, resin, phosphomagnesium cement or Chemically Bonded Phosphate Ceramics (CBPCs).

The reactive material can be encapsulated by a protective layer able to be deteriorate when in contact with liquid and/or gaseous hydrocarbon, in a first embodiment. In a second embodiment, the protective layer is able to be cracked when a crack is propagated inside the set composition. As well, in a third embodiment, the protective layer is able to be deteriorate after a certain period of time.

The composition can comprise flexible particles with a low Young's modulus less than to 5000 MPa and a high Poisson's ratio superior or equal to 0.3. Preferably, the flexible particles have a Young's modulus inferior to 2000 MPa. The flexible additives can be selected from the list consisting of polypropylene, polyethylene, acrylonitrile butadiene, styrene butadiene or polyamide.

The composition can comprise reactive material able to swell in contact with liquid and/or gaseous hydrocarbon substantially spherical and with an average dimension of less than 850 micrometers. Preferably, the reactive material able to swell in contact with liquid and/or gaseous hydrocarbon is substantially spherical and the reactive material has an average particle size distribution less than 90% of particles below 300 micrometers. More preferably, the reactive material has an average particle size distribution less than 84% of particles below 300 micrometers

The composition can comprise reactive material able to swell in contact with water substantially spherical and with an average dimension of less than 1500 micrometers

The composition can comprise fibers selected from the list consisting of polyamide, polyethylene, polypropylene, polyvinyl alcohol (PVA), or metallic fiber such as micro ribbons. The composition can comprise heavy filler able to increase the density of the fluid. And oppositely, the composition can comprise lightweight filler able to decrease the density of the fluid.

In another aspect, a method of completing a well is disclosed, the method comprising: placing a composition of a fluid made of, a settable material and a reactive material able to swell in contact with liquid and/or gaseous hydrocarbon and/or water and/or carbon dioxide; allowing the composition to set; wherein said swellable material is added in a quantity such that when the composition sets, a flow path of liquid and/or gaseous hydrocarbon and/or water and/or carbon dioxide created within the set composition will be stopped by swelling of the reactive material. The composition can be placed by a step of pumping from surface, or directly into the well by a downhole tool for placement in situ. The liquid and/or gaseous hydrocarbon and/or water and/or carbon dioxide reacting is present downhole i.e. swelling is made in situ thanks to downhole elements intrinsically present in the well. Preferably, the method applies with a composition as disclosed above. The flow path can be a fissure, a micro annulus, or a gap.

When the well comprises an annulus between a casing and a formation, preferably the method further comprises the step of placing the composition in the annulus after the step of pumping. The flow path can be located at the interface between the casing and the set composition or at the interface between the set composition and the formation.

The method can further comprise the step of allowing the composition to be exposed to ageing of the well and wherein said reactive material is able to swell when a second flow path of liquid and/or gaseous hydrocarbon is created within the set composition and to stop said second flow path. The second flow path can be located at the interface between the casing and the set composition or at the interface between the set composition and the formation.

The method can apply to pump the composition and to create a plug with said composition. The methods also apply when multiple flow paths are present in the set composition.
In another aspect of the invention, a use of the previous composition for a method of repairing and/or sealing flow path created within the set composition is disclosed; also a use is disclosed wherein the well comprises an annulus between a casing and a formation and wherein the method further applies to restore hydraulic integrity of the annulus. The composition of the material will allow it to react if any flow paths develop that allow the flow of hydrocarbons, and seal off these paths.

### Brief description of the drawings

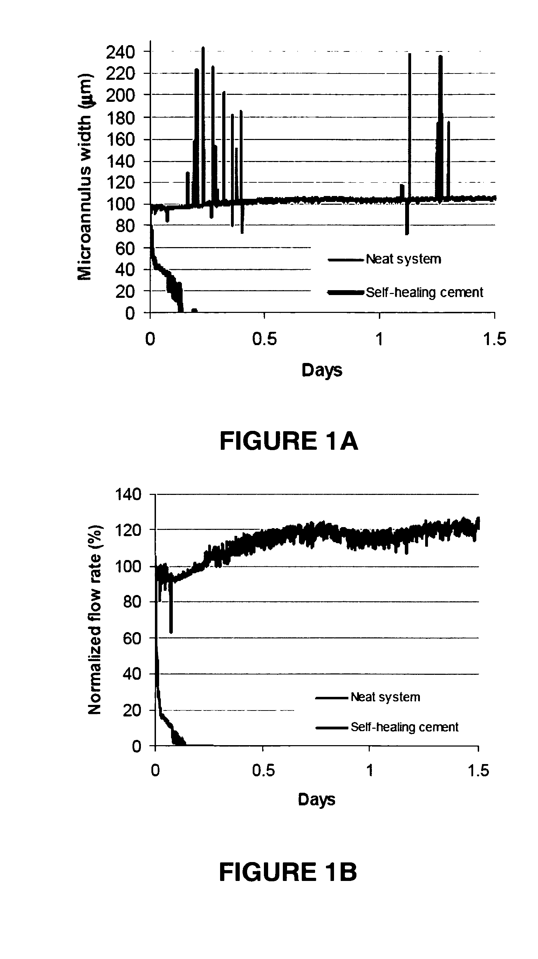

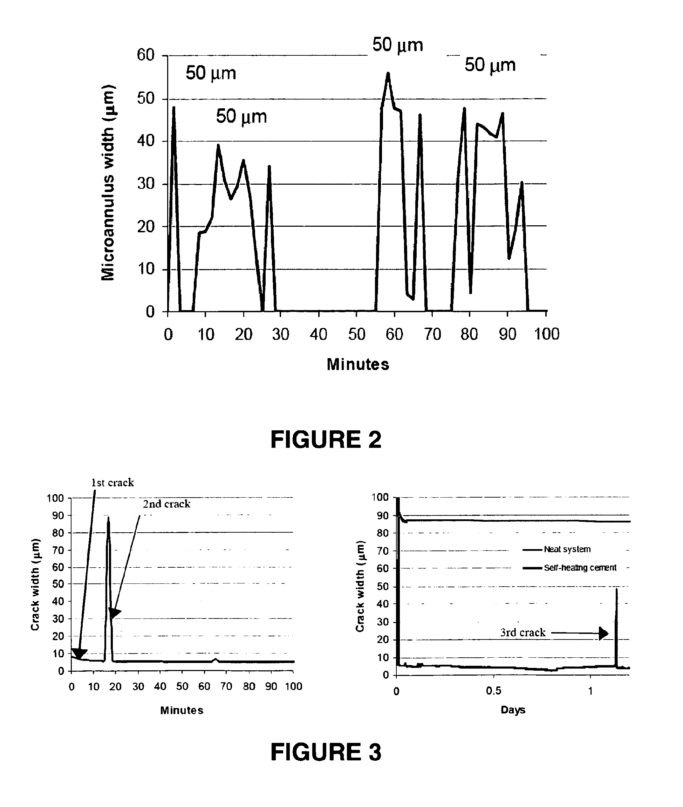

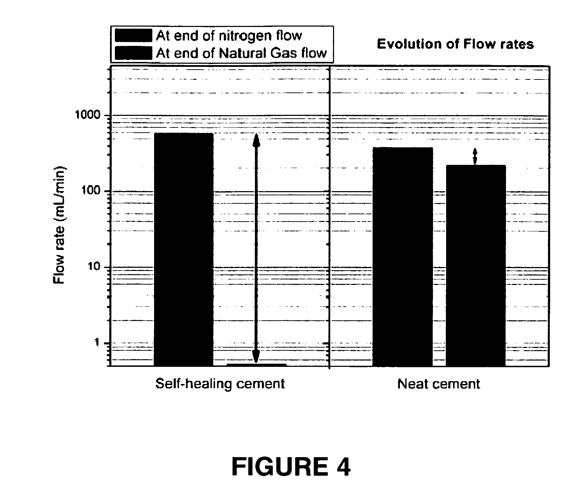

Further embodiments of the present invention can be understood with the appended drawings:
■ Figure 1A and 1B show examples of hydrocarbon flow tests at room temperature and constant injection pressure with neat cement and the system of the invention using a branded dearomatized oil.
■ Figure 2 shows self-healing action of multiple micro-annuli at room temperature with exposure to a branded dearomatized oil.
■ Figure 3 shows self-healing action of multiple crack cycles in oil. Crack width evolution is shown when successively created by applying 1.4 MPa/m at room temperature with exposure to a branded dearomatized oil.
■ Figure 4 shows example of flow tests with dry hydrocarbon gas under pressure with flow rate at the end of nitrogen injection (left part of graph) and flow rate following natural gas injection (right part of the graph).

### Detailed Description

Different solid materials have the property to react with hydrocarbons in particular with subterranean hydrocarbons. One example of a polymer suitable for such use is alkylstyrene which is available in bead form from Imtech Imbibitive Technologies Corp. under the name: Imbiber Beads. These are cross-linked alkylstyrene polymers engineered to absorb a broad range of organic chemicals (hence hydrocarbons). The beads are solid, spherical beads of approx. 200 - 300 microns diameter. They are unaffected by water but when placed in contact with liquid organic materials will absorb up to 27 times the volume of organic liquid and expand up to three times the original diameter, depending on the liquid and other environmental variable such as temperature, pressure, etc. The organic liquid is held in the organic structure and is not released under pressure.

Other example is ground rubber. The ground rubber particles are obtained by recycling tires. The recycling process is a series of shredding and special grinding operations to remove metal and fiber. These particles contain a certain amount of carbon black. Two sources have been tested: ground rubber from ATR (American Tyre Recycler) and ECORR RNM 45 from Rubber Resources. Density of such products is between 1.1 -1.2 g/cm³. It has been patented that the use of ground rubber particles in cement formulations improved the cement mechanical properties by decreasing the value of the Young's modulus and by improving the behavior under shock. These ground rubber particles also have self healing effect and lead to expansion properties in contact with hydrocarbon.

Within the framework of the development, specific test methods and equipment were developed to evaluate self-healing properties of the systems according to the invention. The goal was to generate, or simulate, the situation encountered in the well when the isolation provided by the cement has been lost, and to evaluate the efficiency of the system to restore the original isolation. The simulated loss of isolation in the well can either be, a failure of the cement itself (cracks, fissures), or the creation of a microannulus between the casing and cement, or between the cement and formation.

A test cell, has been developed to evaluate the self-healing capability in an annular configuration. The test cell is constructed of two concentric cylinders delimiting an annular volume. The outer cylinder is made of a thin steel sleeve. The inner cylinder is made of a deformable elastic material. A radially expandable core assembly is inserted inside the inner sleeve. The core is used to expand the inner sleeve in a controlled manner. Its expansion is adjusted and controlled by rotating a handle for a specific number of turns. A top plug and a bottom plug seal the annular volume. The plugs are equipped with fittings that allow fluid to enter and to escape the cell. A microannulus is generated by pouring the cement into the annular space while the inner cylinder is kept expanded. Once the cement has set the expansion, exerted by the core assembly on the inner cylinder, is released. Then, the inner cylinder shrinks back to its original shape, thus generating a microannulus of a controlled size. Radial cracks within the cement are created by expanding the inner core assembly only once the cement has set. The stress and strain generated by the expansion of the core are sufficient to break the cement and to generate radial cracks.

The cell was installed in a flow loop to investigate the self-healing efficiency. At pressure up to 0.4 MPa, which corresponds to a differential pressure of 5.3 MPa/m across the sample it is possible to inject oil through a sample in the cell. Several configurations were tested using oil to simulate the failure of the cement sheath, using the methods described above. In one test, a microannulus of 100 microns was created between the casing and the cement inside the cell. Figures 1A and 1B illustrate that a conventional cement system does not react to the flow of oil (the flow rate does not decrease) whereas the system according to the invention does show a reaction to oil invasion and an efficient closure of the microannulus in less than 6 hours. The set composition has also been shown to be capable of repairing multiple crack/microannulus failures over a short time period. Using the cell in the flow loop, multiple micro annuli and multiple cracks were generated in the sample and flow tests conducted to determine if the matrix remains efficient in repairing the damage in this failure cycle scenario.

Successive microannuli were repaired with the set composition as shown in Figure 2 at a differential pressure of 1.4 MPa/m (note that each time the cement matrix is failed it is not always possible to produce damage in the same places each time the cement matrix is stressed to failure). The same observation was seen at a higher differential pressure of 5.3 MPa/m. Using the same flow loop, the flow of oil through successive cracks (Figure 3), repeating the crack generation method given above several times, was shown to be shut off very efficiently by the set composition whereas the same test utilizing a conventional system does not show any decrease of flow. In this test, an initial crack was measured and evaluated to be nominally 64 microns wide. During the test conducted with the set composition according to the invention, the cracks remained closed when the differential pressure was increased to 5.3 MPa/m.

The same properties are found with a gas environment (including dry gas or natural gas). The tests have highlighted efficient self-healing properties of the system according to the invention when exposed to natural gas under dynamic conditions and pressure. During the tests, a significant decrease of flow rate (from 425 mL/min to 0.52 mL/min) was recorded in less than one hour with set composition. This trend was not obtained with a conventional system under the same conditions (Figure 4).

### Examples

### Example 1

Two sources of ground rubber particles obtained by recycling tires were tested. P1 particles are commercialized by American Tyre Recycler under the name "Rubber 40 mesh" have a density of 1.2 g/cm³ and an average particle size of 425 microns. P2 are commercialized by Rubber Resources, under the product name ECORR RNM 45. The density is 1.2 g/cm³, the average particle size 355 microns. Both are ground rubber obtained by a recycling process involving a series of shredding and special grinding operations to remove metal and fiber. These particles are black and contain a certain amount of carbon black. Recycled rubber has the advantage of being flexible and cheap. The slurry designs and rheological properties are in Table 1 below in which the concentration of solid are given either by reference to the original cement blend (BVOB) or by weight of blend.

**Table 1**

| **Formulations:** | **A1** | **A2** | **A3** | **A4** |
|---|---|---|---|---|
| Particles | P1 | P1 | P2 | P2 |
| Density g/cm³ | 1.93 | 2.01 | 1.93 | 2.01 |
| SVF % | 58 | 58 | 58 | 58 |
| Cement (%BVOB) | 40 | 40 | 40 | 40 |
| Fine silica (%BVOB) | 10 | 10 | 10 | 10 |
| Ground rubber (%BVOB) | 20 | 10 | 20 | 10 |
| Silica sand (%BVOB) | 30 | 40 | 30 | 40 |
| Polypropylene glycol (antifoam) (cc/kg) | 2.66 | 2.66 | 2.66 | 2.66 |
| Polynaphtalene sulfonate (dispersant (cc/kg) | 0.89 | 0.89 | 0.89 | 0.89 |
| Lignosulphonate (cc/kg) | 3.99 | 3.99 | 3.99 | 3.99 |
| **Rheology After mixing** | | | | |
| PV (cP) | 134 | 120 | 134 | 132 |
| Ty (Pa) | 0.96 | 1.67 | 0.96 | 1.91 |
| **Rheology After Conditioning At 60 °C** | | | | |
| PV (cP) | 132 | 98 | 132 | 119 |
| Ty (Pa) | 6.22 | 5.7 | 6.22 | 3.8 |
| API free water (mL) | 2 | 2 | 1 | 1 |
| Sedimentation (delta bottom/top in g/cm³) | 0.037 | 0.079 | 0.032 | 0.047 |

All these formulations have shown excellent result in self healing properties.

### Example 2

Different types of flexible particles whose characteristics are provided Table 2 were studied.

**Table 2**

| **Code** | **Chemical nature** | **Product name** | **Supplier** | **Density g/cm³** | **Size (microns)** |
|---|---|---|---|---|---|
| F1 | Polypropylene | Icorene 9013 P | ICO polymer | 0.9 | 200-800 |
| F2 | Acrylonitrile butadiene copolymer | Chemigum P86F | Eliokem | 1.0 | 350 |

Different slurries were prepared, whose designs and rheological properties are shown Table 3 below.

**Table 3**

| **Formulations:** | **A5** | **A6** | **A7** |
|---|---|---|---|
| **Particle** | **F1** | **F1** | **F2** |
| Density g/cm³ | 1.89 | 1.62 | 1.90 |
| SVF % | 58 | 58 | 58 |
| Cement (%BVOB) | 40 | 40 | 40 |
| Fine silica (%BVOB) | 10 | 10 | 10 |
| Flexible particles F1 or F2 (%BVOB) | 20 | 20 | 20 |
| Ground rubber P1 (%BVOB) | - | 30 | - |
| Silica sand (%BVOB) | 30 | - | 30 |
| Polypropylene glycol (antifoam) (cc/kg) | 2.66 | 2.66 | 2.66 |
| Polynaphtalene sulfonate (dispersant (cc/kg) | 0.89 | 2.66 | 0.89 |
| Lignosulphonate (cc/kg) | 3.99 | 3.99 | 3.99 |
| **Rheology After mixing** | | | |
| PV (cP) | 92 | 102 | 136 |
| Ty (Pa) | 0.19 | 6.7 | 4.3 |
| **Rheology After Conditioning At 60 °C** | | | |
| PV (cP) | 83 | 104 | 99 |
| Ty (Pa) | 2.87 | 3.35 | 5.27 |
| API free water (mL) | 1.3 | 2 | - |
| Sedimentation (delta bottom/top in g/cm³) | 0.006 | - | - |

As well, all these formulations have shown excellent result in self healing properties.

## Claims

1. A composition for completing a well comprising a pumpable fluid made of a settable material and a reactive material able to swell in contact with liquid and/or gaseous hydrocarbon and/or water and/or carbon dioxide, said reactive material added in a quantity such that after the composition sets, a flow path of liquid and/or gaseous hydrocarbon and/or water and/or carbon dioxide created within the set composition will be stopped by swelling of the reactive material.

2. The composition of claim 1, wherein the composition has a solid volume fraction higher or equal to 45% and preferably higher or equal to 50%.

3. The composition of claim 1, wherein the settable material contains cement, the pumpable fluid is a slurry and the composition has a solid volume fraction between 23 % and 40% for an extended slurry.

4. The composition of claim 1, wherein the reactive material able to swell in contact with liquid and/or gaseous hydrocarbon is made of granular, spherical, fiber-like, ovoid, mesh systems, or ribbons material selected from the group consisting of rubber, poly 2 2 1 bicyclo heptene (polynorbornene), alkylstyrene, crosslinked substituted vinyl acrylate copolymers, diatomaceous earth, natural rubber, polyisoprene rubber, vinyl acetate rubber, polychloroprene rubber, acrylonitrile butadiene rubber, hydrogenated acrylonitrile butadiene rubber, ethylene propylene diene monomer, ethylene propylene monomer rubber, polynorbornen, styrene butadiene rubber, styrene/propylene/diene monomer, brominated poly(isobutylene-co-4-methylstyrene) (BIMS), butyl rubber, chlorosulphonated polyethylenes, polyacrylate rubber, polyurethane, silicone rubber, brominated butyl rubber, chlorinated butyl rubber, chlorinated polyethylene, epichlorohydrin ethylene oxide copolymer, ethylene acrylate rubber, ethylene propylene diene terpolymer rubber, sulphonated polyethylene, fluoro silicone rubbers, fluoroelastomer, substituted styrene acrylate copolymer and combination thereof..

5. The composition of claim 1, wherein the reactive material able to swell in contact with water is made of granular, spherical, fiber-like, ovoid, mesh systems, or ribbons material selected from the group consisting acrylic acid type polymers, carboxymethyl cellulose type polymers, highly swelling clay minerals, isobutylene maleic anhydride, polyethylene oxide polymers, polyvinyl alcohol cyclic acid anhydride graft copolymer, sodium bentonite (montmorillonite), starch polyacrylate acid graft copolymer, starch polyacrylonitrile graft copolymers, vinyl acetate-acrylate copolymers, Super Absorbent Polymer, hydrogels and combination thereof.

6. The composition of claim 5, wherein the super-absorbent polymer is selected from the list consisting of polymethacrylate and polyacrylamide or a non-soluble acrylic polymers.

7. The composition of claim 1, wherein the reactive material is made of materials able to swell in contact with liquid and/or gaseous hydrocarbon and of materials able to swell in contact with water and/or of materials able to swell in contact with carbon dioxide.

8. The composition of claim 1, wherein the settable material is taken in the list constituted of: cement, microcement, geopolymer, mixture of cement and geopolymer, resin, phosphomagnesium cement or Chemically Bonded Phosphate Ceramics (CBPCs).

9. The composition of claim 1, wherein the reactive material is encapsulated by a protective layer able to be deteriorate when in contact with liquid and/or gaseous hydrocarbon or water or carbon dioxide.

10. The composition of claim 1, wherein the reactive material is encapsulated by a protective layer able to be cracked when a crack is propagated inside the set composition.

11. The composition of claim 1, wherein the reactive material is encapsulated by a protective layer able to be deteriorate after a certain period of time.

12. The composition of claim 1, further comprising flexible particles with a low Young's modulus inferior to 5000 MPa and a high Poisson's ratio superior or equal to 0.3.

13. The composition of claim 12, wherein the flexible particles have a Young's modulus inferior to 2000 MPa.

14. The composition of claim 12, wherein the flexible additives are selected from the list consisting of polypropylene, polyethylene, acrylonitrile butadiene, styrene butadiene or polyamide.

15. The composition of claim 1, wherein the reactive material able to swell in contact with liquid and/or gaseous hydrocarbon is substantially spherical and has an average dimension of less than 850 micrometers.

16. The composition of claim 1, wherein the reactive material able to swell in contact with liquid and/or gaseous hydrocarbon is substantially spherical and the reactive material has an average particle size distribution less than 90% of particles below 300 micrometers.

17. The composition of claim 16, wherein the reactive material has an average particle size distribution less than 84% of particles below 300 micrometers

18. The composition of claim 1, wherein the reactive material able to swell in contact with water is substantially spherical and has an average dimension of less than 1500 micrometers

19. The composition of claim 1, further comprising fibers selected from the list consisting of polyamide, polyethylene, polypropylene, polyvinyl alcohol (PVA), or metallic fiber such as micro ribbons.

20. The composition of claim 1, further comprising heavy filler able to increase the density of the fluid.

21. The composition of claim 1, further comprising lightweight filler able to decrease the density of the fluid.

22. A method of completing a well comprising:
- placing a composition of a fluid made of, a settable material and a reactive material able to swell in contact with liquid and/or gaseous hydrocarbon and/or water and/or carbon dioxide;
- allowing the composition to set; wherein said swellable material is added in a quantity such that when the composition sets, a flow path of liquid and/or gaseous hydrocarbon and/or water and/or carbon dioxide created within the set composition will be stopped by swelling of the reactive material.

23. The method of claim 22, wherein the step of placing is made by pumping the composition from surface.

24. The method of claim 22, wherein the flow path is a fissure, a micro annulus, or a gap.

25. The method of claim 22, wherein the well comprises an annulus between a casing and a formation, and the method further comprises the step of placing the composition in the annulus after the step of pumping.

26. The method of claim 25, wherein the flow path is located at the interface between the casing and the set composition.

27. The method of claim 25, wherein the flow path is located at the interface between the set composition and the formation.

28. The method of claim 25, further comprising the step of allowing the composition to be exposed to ageing of the well and wherein said reactive material is able to swell when a second flow path of liquid and/or gaseous hydrocarbon and/or water and/or carbon dioxide is created within the set composition and to stop said second flow path.

29. The method of claim 28, wherein the second flow path is located at the interface between the casing and the set composition.

30. The method of claim 28, wherein the second flow path is located at the interface between the set composition and the formation.

31. The method of claim 22, applying to pump the composition and to create a plug with said composition.

32. The method according to any one of claims 22 to 31 wherein multiple flow paths are present in the set composition.

33. Use of the composition as claimed in any one of claims 1 to 21 for a method of repairing and/or sealing flow path created within another set sealant.

34. Use of the composition as claimed in any one of claims 1 to 21 for a method of repairing and/or sealing flow path created within the set composition.

35. Use of claim 33 or 34, wherein the well comprises an annulus between a casing and a formation and wherein the method further applies to restore hydraulic integrity of the annulus.
